# EUROPÄISCHE PATENTSCHRIFT

(11) **EP 0 737 634 B1**
(45) Veröffentlichungstag und Bekanntmachung des Hinweises auf die Patenterteilung: **05.01.2000**
(21) Anmeldenummer: 96104253.8
(22) Anmeldetag: 18.03.1996
(51) Int. Cl.: B65G 47/51, B65G 1/137

(54) **Verfahren zum Sortieren einer Mehrzahl einzeln geförderter Gegenstände**
Sorting method for several articles which are separately fed
Procédé de tri de plusieurs objets transportés séparément

(30) Priorität: 11.04.1995 DE 19513734
(43) Veröffentlichungstag der Anmeldung: 16.10.1996
(73) Patentinhaber: WF Logistik GmbH, 86899 Landsberg (DE)
(72) Erfinder: Schönenberger, Rolf, 86899 Landsberg/Lech (DE)
(74) Vertreter: Grünecker, Kinkeldey, Stockmair & Schwanhäusser Anwaltssozietät

(56) Entgegenhaltungen:
- EP-A- 0 336 714
- US-A- 5 238 122
- US-A- 5 388 703

## Beschreibung

Die Erfindung bezieht sich auf ein Verfahren zum Sortieren einer Mehrzahl einzeln geförderter Gegenstände in einer Hängefördereinrichtung, der im Oberbegriff des Anspruchs 1 erläuterten Art.

Ein derartiges Verfahren ist aus der DE-OS 42 26 066 bekannt. Das bekannte Verfahren arbeitet mit einer Mehrzahl hintereinander geschalteter Förderkreisel, auf denen einzeln zu fördernde Gegenstände umlaufen. Die Gegenstände werden un- oder vorgeordnet auf den ersten Förderkreisel übergeben. Ist die Übergabe der Gegenstände auf den ersten Förderkreisel beendet, beginnt der Sortiervorgang. Dabei werden die gewünschten Gruppen zunächst vom ersten auf den zweiten Förderkreisel übergeben, wobei die Förderrichtung umkehrbar ist, um die Gegenstände gleichzeitig in der gewünschten Reihenfolge auf dem zweiten Förderkreisel anzusammeln. Es können auch gleichzeitig zwei verscheidene Gruppen auf dem zweiten Förderer angesammelt werden. Es ist weiterhin möglich, einen dritten oder noch weitere Förderkreisel an den zweiten Förderkreisel anzukoppeln, wobei jedem der Förderkreisel eine bestimmte Gruppe zugeordnet ist und dieser Förderkreisel gleichzeitig als Lager für diese Gruppe ausgebildet sein kann. Das bekannte Verfahren arbeitet somit auf Sortierschritte fixiert. So werden die Sortierschritte erst dann durchgeführt, wenn alle zu sortierenden Gegenstände von der Identifikationseinrichtung erfaßt auf dem ersten Fröderkreisel anwesend sind. Dadurch wird jedoch einerseits die Sortierzeit länger und andererseits ist das bekannte Verfahren nicht universell genug, um mit unterschiedlichen Sortieraufgaben fertig werden zu können.

Aus der DE 35 19 630 C2 ist ein Verfahren und eine Vorrichtung zum Komplettieren von aus mehreren Teilen bestehenden Erzeugnissen in einem in mehrere Abteilungen gegliederten Lager bekannt. Mit diesem Verfahren soll sichergestellt werden, daß zwei vorbestimmte und zusammengehörige Gegenstände, insbesondere Bekleidungseinzelteile wie Jacke und Hose eines Anzugs, die zu unterschiedlichen Zeiten angeliefert werden, auf den gleichen Lagerplatz gelangen. Zu diesem Zweck werden die Gegenstände an einer Identifikationseinrichtung vorbeigeführt, wo sie identifiziert werden und wo ihnen ein spezieller Lagerplatz zugeordnet wird. Diese Information wird auf ein Etikett gedruckt, das am Gegenstand befestigt wird. Dann wird der Gegenstand auf einen Verteilförderer entlassen, der den Gegenstand entlang einer Reihe von Lagergassen führt, in denen weitere, als Stichstrecken ausgebildete Förderer angeordnet sind. Ist der Gegenstand an der zugordneten Lagergasse angekommen, wird er vom Veteilförderer abgeworfen und über die Stichstrecke bis zum vorbestimmten Lagerplatz verfahren, auf den er per Hand gehängt wird.

Dieses Verfahren ist somit eine Art Leitsystem, mit dem sichergestellt werden soll, daß ein bestimmter Gegenstand einen bestimmten Lagerplatz auf dem kürzest möglichen Weg und mit größtmöglicher Sicherheit erreicht, aber kein Verfahren zum Sortieren einer Mehrzahl einzeln geförderter Gegenstände zu Gruppen in wenigstens einem Sortierschritt; und die Gegenstände werden auch nicht von einem ersten auf einen zweiten Förderkreis übertragen. Mit einer Sortieraufgabe, die die potentielle Fähigkeit voraussetzt, eine im wesentlichen unbegrenzte Vielzahl von Gegenständen in gewünschter Weise zu Gruppen zusammenzustellen, in der Reihenfolge zu verändern und gegebenenfalls verzögert bzw. beschleunigt wegzufördern, wäre dieses Verfahren völlig überfordert.

Der Erfindung liegt somit die Aufgabe zugrunde, ein zeitsparendes, universell einsetzbares Verfahren zum Sortieren von Gegenständen zu schaffen.

Die Aufgabe wird durch die im Anspruch 1 angegebenen Merkmale gelöst.

Dem erfindungsgemäßen Verfahren liegt die Überlegung zugrunde, daß das Sortieren wesentlich beschleunigt werden kann, wenn sich das Verfahren nicht mehr wie im Stand der Technik an den einzelnen zu sortierenden Gegenständen sondern an einem möglichst optimalen Warenfluß orientiert. Auf dieser Basis lassen sich dann die unterschiedlichsten Sortieraufgaben ohne größere Veränderungen im Aufbau der Transportvorrichtung realisieren. Durch die erfindungsgemäße Ausgestaltung wirkt der erste Förderkreis als frei und gegebenenfalls chaotisch belegbarer Vor- bzw. Aufnahmepuffer, der alles aufnimmt, was zu beliebigen Zeiten aufgegeben wird. Die Identifizierungseinrichtung identifiziert jeden einzelnen Gegenstand und leitet die Übergabe einer vorbestimmten Anzahl von Gegenständen, die einem gleichen Auswahlkriterium entsprechen, auf den zweiten Förderkreis ein, sobald sich diese vorbestimmte Anzahl auf dem ersten Förderkreis befindet. Im Extremfall kann die Übergabe dieses Gegenstandes bereits eingeleitet werden, sobald sich nur einer der Gegenstände nach dem speziellen Auswahlkriterium auf dem ersten Förderkreis befindet. Die anderen Gegenstände bleiben solange im ersten Förderkreis, bis nach den Auswahlkriterien sortiert wird, denen sie entsprechen.

Besonders zweckmäßig ist es, wenn gemäß Anspruch 2 auch jeder weitere Sortierschritt jeweils beim Übergeben auf einen gesonderten Förderkreis durchgeführt wird, da dadurch die einzelnen Förderschritte im wesentlichen gleichzeitig durchgeführt werden können, was die Sortierzeit weiter verringert.

Noch weiter verringert wird die Sortierzeit, wenn gemäß Anspruch 3 der nächste Sortierschritt bereits begonnen wird, während der vorangegangene Sortierschritt noch nicht beendet ist.

Durch die Ausgestaltung nach Anspruch 4 kann die Pufferkapazität des ersten Förderkreises erhöht und noch besser an die jeweiligen Erfordernisse angepaßt werden.

Die Maßnahmen nach den Ansprüchen 4 und 5 dienen der weiteren Vereinfachung des Verfahrens.

Durch die Ausgestaltung nach Anspruch 6 ist eine weitere Feinsortierung möglich.

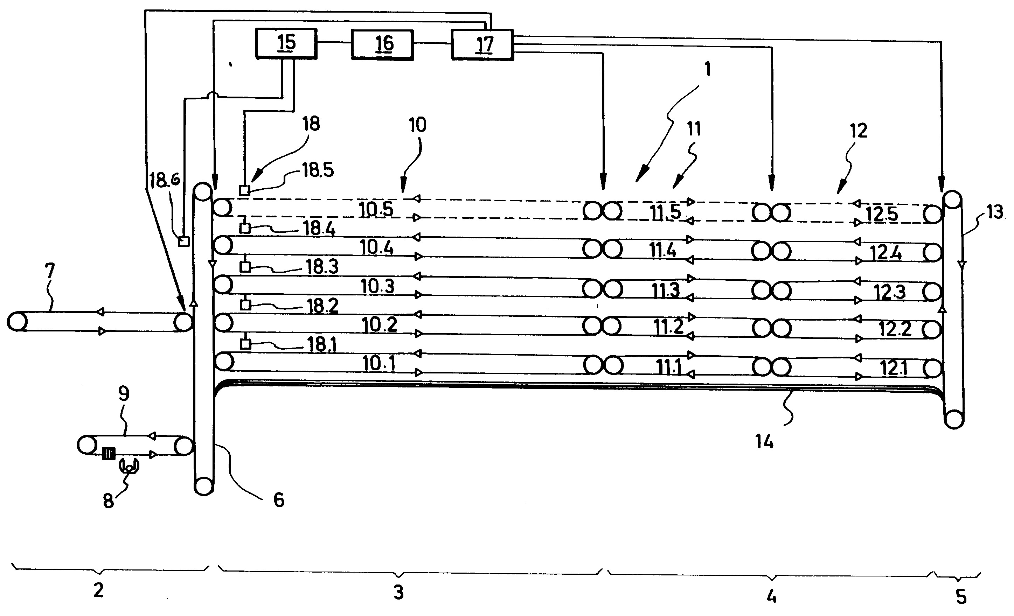

Ein Ausführungsbeispiel der Erfindung wird nachfolgend anhand der einzigen Zeichnung, die eine schematische Darstellung einer für die Durchführung des erfindungsgemäßen Verfahrens geeignete Hängefördereinrichtung 1 zeigt.

Die Hängefördereinrichtung 1 enthält eine Eingabezone 2, eine Pufferzone 3, eine Sortierzone 4 und eine Ausgabezone 5. Die Eingabezone 2 enthält einen Zulieferer 6, der zweckmäßigerweise als Förderkreisel ausgebildet ist, und in der durch die Pfeile gekennzeichneten Richtung umläuft. Dem Zulieferer 6 kann ein Beladeförderer 7 vorgeschaltet sein, der ebenfalls als Förderkreisel ausgebildet ist, in der durch die Pfeile gekennzeichneten Richtung umläuft und den Zulieferer 6 mit den zu fördernden Gegenständen beschickt.

Die Hängefördereinrichtung 1 ist aus handelsüblichen Förderern zusammengestellt, die nicht näher erläutert werden müssen.

Für die Zwecke der nachfolgenden Beschreibung soll der Begriff "Gegenstände" sowohl einzelne Waren oder Wareneinheiten, beispielsweise auf jeweils einem Kleiderbügel hängende Kleidungsstücke oder auf einem Kleiderbügel hängende Komplets (Anzug, Kostüm) oder eine Mehrzahl von Waren bezeichnen, die gemeinsam mit einem und demselben Fördermittel über ihren gesamten Weg transportiert werden.

In der Eingabezone 2 ist weiterhin ein Arbeitsplatz 8 an einem weiteren Förderer 9 vorgesehen, an dem fehlerhaft sortierte Gegenstände geprüft und entweder aus dem Förderkreislauf in der Hängefördereinrichtung 1 entfernt oder über den Zulieferer 6 wiederum in den Förderkreislauf eingespeist werden.

Die Pufferzone 3 enthält eine Vielzahl von als einzelne Förderkreisel ausgebildeten ersten Förderkreisen 10, von denen fünf Förderkreise 10.1, 10.2, 10.3, 10.4 und 10.5 dargestellt sind. Jeder dieser Förderkreise 10 wird über den Zulieferer 6 über jeweils eine nicht dargestellte Weiche beschickt.

In der Sortierzone 4 schließen sich an jeweils einen ersten Förderkreis 10 jeweils ein wiederum als einzelner Förderkreisel ausgebildeter zweiter Förderkreis 11 an, wobei jeweils wiederum fünf zweite Förderkreise 11.1, 11.2, 11.3, 11.4 und 11.5 dargestellt sind. An jeden der zweiten Förderkreise 11 schließt sich innerhalb der Sortierzone 4 über jeweils eine Weiche jeweils ein dritter Förderkreis 12 an, wobei wiederum die fünf als Förderkreisel ausgebildeten dritten Förderkreise 12.1, 12.2, 12.3, 12.4 und 12.5 dargestellt sind. Auch die dritten Förderkreise 12 laufen in den durch die Pfeile gekennzeichneten Richtungen um.

Jeder der dritten Förderkreise 12.1, 12.2, 12.3, 12.4 und 12.5 sind über jeweils eine nicht gezeichnete Weiche mit einem gemeinsamen Wegförderer 13 in der Ausgabezone 5 verbunden.

Bei Bedarf führt vom Wegförderer 13 eine Förderstrecke 14 zurück zum Zulieferer 6. Die Förderstrecken 14 können, wie dargestellt, als Stichstrecken oder bei Bedarf ebenfalls als Förderkreisel ausgebildet sein und dienen der Rückführung entweder falsch sortierter oder fehlerhafter Gegenstände bzw. leerer Fördermittel, wenn die zu fördernden Gegenstände beispielsweise am Wegförderer 13 von ihren Fördermitteln abgenommen werden.

Die Hängefördereinrichtung 1 enthält weiterhin eine nur schematisch dargestellte Identifikationseinrichtung 15, die über einen Rechner 16 mit einer Steuerung 17 verbunden ist. Identifikationseinrichtung, Rechner und Steuerung sind nur kästchenförmig dargestellt und enthalten handelsübliche Bauteile.

Die Identifikationsvorrichtung 15 enthält wenigstens jeweils einen Sensor 18, der als Lesegerät für an den Gegenständen angebrachte Codierungen oder dgl. ausgebildet sein kann, die Informationen beispielsweise über die Art, die Anzahl und Reihenfolge der Gegenstände liefern, die sich in der Hängefördereinrichtung 1 befinden. Im dargestellten Ausführungsbeispiel ist jeweils ein Sensor 18.1, 18.2, 18.3, 18.4 und 18.5 jedem ersten Förderkreis 10.1, 10.2, 10.3, 10.4 und 10.5 zugeordnet. Selbstverständlich können weitere Sensoren oder Lesegeräte an anderen Stellen der Hängefördereinrichtung 1 beispielsweise im Bereich des Zulieferers 6 oder im Bereich des Wegförderers 13 vorgesehen werden.

Die Signale der Sensoren 18 werden von der Identifikationseinrichtung 15 an den Rechner 16 geleitet, der je nach Programm die Steuerung 17 beaufschlagt. Die Steuerung 17 ist zumindest mit den Weichen zwischen den Förderkreisen 10 und 11, zwischen den Förderkreisen 11 und 12 und zwischen dem dritten Förderkreis 12 und dem Wegförderer 13 verbunden und öffnet und schließt diese nach Vorgabe durch den Rechner. Zusätzlich kann die Steuerung 17 auch die Steuerung der Weichen zwischen dem Beschicker 7 und dem Zulieferer 6 bzw. dem Zulieferer 6 und den ersten Förderkreisen 10 übernehmen. Außerdem kann die Steuerung 17 die Umlaufgeschwindigkeit der Förderkreise regeln.

Es soll vorausgesetzt werden, daß in der Hängefördereinrichtung 1 Gegenstände unterschiedlicher Arten und in willkürlicher Reihenfolge zu Gruppen zusammengestellt werden sollen, die jeweils nur Gegenstände einer einzigen Art in einer vorbestimmten Reihenfolge enthalten. Die Gegenstände werden über den Zulieferer 6 wahllos und im wesentlichen nur durch die Förderkapazität der ersten Förderkeise 10 bestimmt auf alle ersten Förderkreise 10.1, 10.2, 10.3, 10.4, 10.5 verteilt. Die ersten Förderkreise, dienen somit der freibelegbaren, chaotischen Vorpufferung. Dadurch ist eine hohe Belegungsdichte der Kreise möglich. Jeder der Sensoren 18.1, 18.2, 18.3, 18.4., 18.5 identifiziert jeden einzelnen Gegenstand auf dem zugeordneten Förderkreis 10 im zeitlichen Ablauf, so daß der Rechner 16 die Position jedes einzelnen Gegenstandes auf jedem ersten Förderkreis 10.1 bis 10.5, in Abhängigkeit von der Fördergeschwindigkeit und der Länge der Förderstecke, zu jedem Zeipunkt genau angeben kann.

Die Anzahl der Gegenstände in den zu bildenden Gruppen wird in vorbestimmte Teilmengen unterteilt. Jede dieser Teilmengen wird sofort aus den ersten Förderkreisen abgerufen, sobald eine dieser Teilmenge entsprechende Anzahl der Gegenstände auf einem der ersten Förderkreise 10.1 bis 10.5 angesammelt ist. Zum Ausschleusen wird über die Steuereinrichtung 17 die Weiche zwischen dem jeweiligen ersten Förderkreis 10.1 bis 10.5 und dem zugeordneten zweiten Förderkreis 11.1 bis 11.5 betätigt, sobald sich ein Gegenstand dieser Teilmenge im Bereich der Weiche befindet.

Danach werden die Gegenstände gleicher Art aus dieser Teilmenge vom jeweiligen zweiten Förderkreis 11.1 bis 11.5 auf den zugeordneten dritten Förderkreis 12.1 bis 12.5 derart übergeben, daß sich die Gegenstände auf den dritten Förderkreisen 12.1 bis 12.5 bereits in jeweils der gewünschten Reihenfolge befinden. Während dieses Sortiervorganges kann ohne weiteres eine zweite Teilmenge von Gegenständen dieser Art vom entsprechenden ersten Förderkreis 10 auf den zugeordneten zweiten Förderkreis 11 übergeben werden, ohne daß dies den Sortierschritt zwischen dem zweiten Förderkreis 11 und dem dritten Förderkreis 12 stört, da die Gegenstände einzeln identifiziert sind.

Befinden sich auf mehreren ersten Förderkreisen 10 Gegenstände der auszusortierenden Art und sollen alle Gegenstände dieser Art gemeinsam in eine vorgegebenen Reihenfolge überführt werden, so werden die in ihrer Reihenfolge bereits auf den dritten Förderkreisen 12 vorsortierten Gegenstände über die entsprechend gesteuerten Weichen in einer derartigen Reihenfolge auf den Wegförderer übertragen, daß sich schließlich auf dem Wegförderer 13 die gewünschte Gruppe von Gegenständen einer Art in der vorbestimmten Reihenfolge befindet und von dort entweder abgezogen oder zur Weiterverarbeitung transportiert werden kann.

Für eine weitergehende Feinsortierung können die Gegenstände insbesondere auf den zweiten und dritten Förderkreisen 11 und 12 auch mehrfach umlaufen, so daß ein zielgerichtetes Einschleusen von Gegenständen auch zwischen bereits angesammelten Gruppen auf dem jeweils nachfolgenden Förderkreis 11 oder 12 möglich ist.

Zur Erleichterung der Sortierung können die Gegenstände statt chaotisch auch vorsortiert auf die ersten Förderkreise übergeben werden, wobei die Vorsortierung zweckmäßigerweise so erfolgt, daß eine bestimmte Anzahl Förderkreise 10 für eine bestimmte Art der Gegenstände oder für bestimmte Arten der Gegenstände reserviert wird, so daß sich beispielsweise auf dem Förderkreis 10.1 nur Gegenstände zweier Arten befinden. Um auch dann eine automatische Beschickung der Pufferzone 3 zu gewährleisten, sollte der Zulieferer 6 mit einem weiteren Sensor 18.6 versehen werden.

Werden fehlerhafte Gegenstände oder fehlerhaft codierte Gegenstände festgestellt, so können sie vom Wegförderer 13 über die Förderstrecke 14 zurück zum Zulieferer 6 gefördert werden. Zweckmäßigerweise wird dann durch einen weiteren, nicht gezeigten Sensor, beispielsweise einer Lichtschranke, festgestellt, daß ein derartiger Gegenstand zurückkommt, so daß die nicht gezeigte Weiche zwischen dem Zulieferer 6 und dem Förderer 9 betätigt wird, um diesen Gegenstand auf den Förderer 9 und dann zum Arbeitsplatz 8 zu fördern. Vom Arbeitsplatz 8 kann der Gegenstand wieder in den Zulieferer 6 eingeschleust werden.

Anstelle der beschriebenen automatischen Beschickung können die Gegenstände jedoch auch am Arbeitsplatz 8 oder einem anderen Arbeitsplatz am Beschicker 6 manuell in den Zulieferer 6 oder aber manuell direkt in den ersten Förderkreise 10 eingeschleust werden. Auch eine Kombination von automatischer und manueller Beschickung ist möglich. Der gemeinsame Wegförderer kann auch entfallen, wenn die Gegenstände direkt am letzten Förderkreisel der Sortierzone entnommen werden. Anstelle der dargestellten Dreikreiselgruppen können Zweikreiselgruppen oder Kreiselgruppen mit mehr als drei Förderkreisen eingesetzt werden. Außerdem kann jeder Förderkreis aus mehreren Kreiseln gleicher Funktion und Steuerung bestehen.

## Patentansprüche

1. Verfahren zum Sortieren einer Mehrzahl einzeln geförderter Gegenstände zu Gruppen in wenigstens einem Sortierschritt in einer Hängefördereinrichtung, wobei die Gegenstände im wesentlichen unsortiert in einen ersten Förderkreis (10) eingeschleust werden und von dort auf wenigstens einen zweiten Förderkreis (11) übergeben werden, wobei eine Identifizierungseinrichtung (15) jeden einzeln zu fördernden Gegenstand identifiziert, **dadurch gekennzeichnet**, daß der erste Förderkreis (10) als frei belegbarer Vorpuffer verwendet wird, und daß die Gegenstände in einer eine vorbestimmte Anzahl enthaltenden Teilmenge in einem ersten Sortierschritt unabhängig vom Beladungszustand des ersten Förderkreises (11) vom ersten Förderkreis auf den zweiten Förderkreis übergeben werden, sobald die im ersten Sortierschritt auszusortierende Teilmenge der Gegenstände auf dem ersten Förderkreis identifiziert wurde.

2. Verfahren nach Anspruch 1, **dadurch gekennzeichnet**, daß zum Sortieren von Gegenständen in zwei Sortierschritten dem zweiten Förderkreis (11) ein dritter Förderkreis (12) in Reihe nachgeschaltet ist, wobei die Gegenstände im zweiten Sortierschritt sortiert vom zweiten auf den dritten Förderkreis übergeben werden.

3. Verfahren nach Anspruch 2, **dadurch gekennzeichnet**, daß die Gegenstände vom zweiten auf den dritten Förderkreis unabhängig vom Beladungszustand des zweiten Förderkreises übergeben werden.

4. Verfahren nach einem der Ansprüche 1 bis 3, **dadurch gekennzeichnet**, daß eine Mehrzahl Kreiselgruppen jeweils bestehend aus einem ersten Förderkreis und einem zweiten Förderkreis über einen gemeinsamen Zulieferer beladen werden.

5. Verfahren nach Anspruch 4, **dadurch gekennzeichnet**, daß die Kreiselgruppen über einen gemeinsamen Wegförderer entladen werden.

6. Verfahren nach einem der Ansprüche 1 bis 5, **dadurch gekennzeichnet**, daß die Gegenstände auf den Förderkreisen mehrfach umlaufen.

## Claims

1. Method for sorting a plurality of separately conveyed articles into groups in at least one sorting stage in a suspension conveyor system, in which the essentially unsorted articles are fed into a first conveyor circuit (10) and are transferred therefrom onto at least one second conveyor circuit (11), each article that is to be separately conveyed being identified by an identification device (15), characterized in that the first conveyor circuit (10) is used as a freely stockable initial buffer, and in that, in a first sorting stage, the articles are transferred, in a part quantity containing a predetermined number, from the first conveyor circuit onto the second conveyor circuit (11), regardless of the loading condition of the first conveyor circuit, as soon as the required part quantity of articles on the first conveyor circuit has been identified in the first sorting stage.

2. Method according to Claim 1, characterized in that, in order that articles may be sorted in two sorting stages, a third conveyor circuit (12) is coupled in series with, and downstream of, the second conveyor circuit (11), sorted articles being transferred, in the second sorting stage, from the second conveyor circuit onto the third conveyor circuit.

3. Method according to Claim 2, characterized in that the articles are transferred from the second conveyor circuit onto the third conveyor circuit regardless of the loading condition of the second conveyor circuit.

4. Method according to any one of Claims 1 to 3, characterized in that a plurality of loops each comprising a first conveyor circuit and a second conveyor circuit are loaded by a common feeder.

5. Method according to Claim 4, characterized in that the loops are unloaded by a common discharge conveyor.

6. Method according to any one of Claims 1 to 5, characterized in that the articles travel repeatedly around the conveyor circuits.

## Revendications

1. Procédé pour trier une pluralité d'objets transportés individuellement par groupes en au moins une étape de tri dans un dispositif de transport suspendu, les objets étant introduits essentiellement non triés dans un premier circuit de transport (10) et de là transférés sur au moins un deuxième circuit de transport (11), un dispositif d'identification (15) identifiant chaque objet individuel à transporter, **caractérisé en ce que** le premier circuit de transport (10) est utilisé en tant que tampon d'entrée pouvant être chargé librement, et en ce que, dans une première étape de tri, les objets sont transférés dans une quantité partielle comprenant un nombre prédéterminé, indépendamment de l'état de chargement du premier circuit de transport, du premier circuit de transport sur le deuxième circuit de transport (11), dès que la quantité partielle des objets à trier dans la première étape de tri a été identifiée sur le premier circuit de transport.

2. Procédé selon la revendication 1, **caractérisé en ce que** pour trier des objets en deux étapes de tri un troisième circuit de transport (12) est monté en série après le deuxième circuit de transport (11), les objets triés dans la seconde étape de tri étant transférés du deuxième au troisième circuit de transport.

3. Procédé selon la revendication 2, **caractérisé en ce que** les objets sont transférés du deuxième au troisième circuit de transport indépendamment de l'état de chargement du deuxième circuit de transport.

4. Procédé selon l'une des revendications 1 à 3, **caractérisé en ce qu'**une pluralité de groupes à gyroscopes comportant chacun un premier circuit de transport et un deuxième circuit de transport est chargée par l'intermédiaire d'un dispositif d'alimentation commun.

5. Procédé selon la revendication 4, **caractérisé en ce que** les groupes à gyroscopes sont déchargés par l'intermédiaire d'un convoyeur de sortie commun.

6. Procédé selon l'une des revendications 1 à 5, **caractérisé en ce que** les objets tournent plusieurs fois sur les circuits de transport.
